(19) Europäisches Patentamt
European Patent Office
Office européen des brevets

(11) **EP 4 624 083 A1**

(12) **EUROPEAN PATENT APPLICATION**

(43) Date of publication:
**01.10.2025 Bulletin 2025/40**

(21) Application number: **25167465.1**

(22) Date of filing: **31.03.2025**

(51) International Patent Classification (IPC):
***B23H 7/20*** *(2006.01)* ***G01B 21/04*** *(2006.01)*
***G05B 19/401*** *(2006.01)*

(52) Cooperative Patent Classification (CPC):
**B23H 7/02; B23H 7/20; B23H 11/00; G01B 21/042;
G05B 19/401;** B23H 2500/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2024 US 202418622261**

(71) Applicant: **Pratt & Whitney Canada Corp.
(01BE5) Longueuil, QC J4G 1A1 (CA)**

(72) Inventors:
• **GUIASSA, Rachid**
**(01BE5) Longueuil, J4G 1A1 (CA)**
• **ING, Visal**
**(01BE5) Longueuil, J4G 1A1 (CA)**
• **HARDY, Ghislain**
**(01BE5) Longueuil, J4G 1A1 (CA)**

(74) Representative: **Dehns
10 Old Bailey
London EC4M 7NG (GB)**

(54) **SYSTEM AND METHOD FOR CALIBRATING A MACHINING SYSTEM**

(57) A machining system (20) includes a WEDM assembly (22), a probe assembly, a calibration artifact (66), and a controller. The WEDM assembly (22) includes a conductive wire. The conductive wire extends between and to an upper guide head and a lower guide head. The probe assembly includes a touch probe (46). The calibration artifact (66) includes an artifact body (68) forming a probe cavity (82) and a wire cavity (84). The controller is configured to identify a probe X-position and a probe Y-position of the touch probe (46) by controlling the WEDM assembly (22) to move the touch probe (46) to contact the calibration artifact (66) with the touch probe (46) disposed within the probe cavity (82), identify a wire X-position and a wire Y-position of the conductive wire by controlling the WEDM assembly (22) to move the conductive wire to contact the calibration artifact (66) with the conductive wire disposed within the wire cavity (84), and calibrate the machining system (20) by determining an X-offset and a Y-offset of the conductive wire relative to the touch probe and storing the X-offset and the Y-offset.

*FIG. 5*

EP 4 624 083 A1

## Description

TECHNICAL FIELD

This invention relates to systems and methods for calibrating a machining system including a wire electrical discharge machining (WEDM) assembly.

BACKGROUND OF THE ART

Wire electrical discharge machining (WEDM) systems may be used in the manufacture of a variety of components. These WEDM systems may be used, for example, for machining (e.g., cutting) shapes in certain low-machinability materials with greater effectiveness than some other conventional machining processes including milling, turning, drilling, and grinding. Various WEDM systems and methods for their use are known in the art. While these known systems and methods may be useful for their intended purposes, there is always room in the art for improvement.

SUMMARY

It should be understood that any or all of the features or embodiments described herein can be used or combined in any combination with each and every other feature or embodiment described herein unless expressly noted otherwise.

According to an aspect of the present invention, there is provided a machining system for an aircraft propulsion system component which includes a wire electrical discharge machining (WEDM) assembly, a probe assembly, a calibration artifact, and a controller. The WEDM assembly includes an assembly body, an upper guide head, a lower guide head, and a conductive wire. The assembly body is movable relative to a machine coordinate system of the machining system. The machine coordinate system includes at least an X-direction and a Y-direction. The upper guide head and the lower guide head are disposed at the assembly body. The conductive wire extends between and to the upper guide head and the lower guide head along a wire axis in a Z-direction. The probe assembly includes a touch probe. The touch probe extends between and to a proximal end and a distal end along a probe axis. The proximal end is mounted to the assembly body. The calibration artifact includes an artifact body. The artifact body forms a probe cavity and a wire cavity. The probe cavity extends about a probe cavity axis. The wire cavity extends about a wire cavity axis different than the probe cavity axis. The controller includes a processor in communication with a non-transitory memory storing artifact locating parameters of the calibration artifact and instructions. The instructions, when executed by the processor, cause the processor to identify a probe X-position and a probe Y-position of the touch probe, in the machine coordinate system, by controlling the WEDM assembly to move the touch probe to contact the calibration artifact at a plurality of probe contact positions with the touch probe disposed within the probe cavity, identify a wire X-position and a wire Y-position of the conductive wire, in the machine coordinate system, by controlling the WEDM assembly to move the conductive wire to contact the calibration artifact at a plurality of wire contact positions with the conductive wire disposed within the wire cavity, and calibrate the machining system by determining an X-offset and a Y-offset of the conductive wire relative to the touch probe and storing the X-offset and the Y-offset in the memory. The X-offset is determined using the probe X-position, the wire X-position, and the artifact locating parameters. The Y-offset is determined using the probe Y-position, the wire Y-position, and the artifact locating parameters.

In an embodiment in accordance with any of the aspects or embodiments described above and herein, the machine coordinate system may further include the Z-direction. The instructions, when executed by the processor, may further cause the processor to identify a probe Z-position of the touch probe, in the machine coordinate system, by controlling the WEDM assembly to move the touch probe to contact the calibration artifact at the plurality of probe contact positions with the touch probe disposed within the probe cavity.

In an embodiment in accordance with any of the aspects or embodiments described above and herein, the machining system may further include a reference body. The instructions, when executed by the processor, may further cause the processor to identify a wire Z-position of the conductive wire, in the machine coordinate system, by controlling the WEDM assembly to move the upper guide head to contact the reference body in the Z-direction and calibrate the WEDM assembly by determining a Z-offset of the conductive wire relative to the touch probe and storing the Z-offset in the memory. The Z-offset may be determined using the probe Z-position, the wire Z-position, and the artifact locating parameters.

In an embodiment in accordance with any of the aspects or embodiments described above and herein, the probe cavity may extend between and to a first probe cavity end and a second probe cavity end along the probe cavity axis. The calibration artifact may include a probe cavity sidewall and an end surface forming the probe cavity. The probe cavity sidewall may extend between and to the first probe cavity end and the second probe cavity end circumscribing the probe cavity. The end surface may be disposed at the second probe cavity end.

In an embodiment in accordance with any of the aspects or embodiments described above and herein, the wire cavity may extend through the calibration artifact between and to a first wire cavity end and a second wire cavity end along the wire cavity axis. The calibration artifact may include a wire cavity sidewall. The wire cavity sidewall may extend between and to the first wire cavity end and the second wire cavity end.

In an embodiment in accordance with any of the aspects or embodiments described above and herein, the wire cavity sidewall may form a counterbore shape of the wire cavity.

In an embodiment in accordance with any of the aspects or embodiments described above and herein, the probe cavity axis may be aligned with the probe axis and the wire cavity axis may be aligned with the wire axis.

In an embodiment in accordance with any of the aspects or embodiments described above and herein, the probe axis may extend horizontally in the X-direction.

In an embodiment in accordance with any of the aspects or embodiments described above and herein, the probe axis may extend vertically in the Z-direction.

In an embodiment in accordance with any of the aspects or embodiments described above and herein, the probe axis may extend obliquely relative to two or more of the X-direction, the Y-direction, or the Z-direction.

In an embodiment in accordance with any of the aspects or embodiments described above and herein, the machining system may further include a machining platform. The calibration artifact may be fixedly mounted to the machining platform.

In an embodiment in accordance with any of the aspects or embodiments described above and herein, the machining platform may include a dielectric fluid tank. The calibration artifact may be fixedly mounted to the machining platform at the dielectric fluid tank.

According to another aspect of the present invention, there is provided a method for calibrating a machining system for an aircraft propulsion system component which includes identifying, at a controller of the machining system, a probe X-position and a probe Y-position of a touch probe of the machining system, in a machine coordinate system, by controlling a WEDM assembly to move the touch probe to contact a calibration artifact at a plurality of probe contact positions with the touch probe disposed within a probe cavity of the calibration artifact, identifying, at the controller, a wire X-position and a wire Y-position of a conductive wire of the WEDM assembly, in the machine coordinate system, by controlling the WEDM assembly to move the conductive wire to contact the calibration artifact at a plurality of wire contact positions with the conductive wire disposed within a wire cavity of the calibration artifact, and calibrating the machining system, at the controller, by determining an X-offset and a Y-offset of the conductive wire relative to the touch probe and storing the X-offset and the Y-offset in memory of the controller. The X-offset is determined using the probe X-position, the wire X-position, and artifact locating parameters of the calibration artifact. The Y-offset is determined using the probe Y-position, the wire Y-position, and the artifact locating parameters.

In an embodiment in accordance with any of the aspects or embodiments described above and herein, the method may further include forming the aircraft propulsion system component, with the machining system, by positioning a workpiece on a machining platform of the machining system, locating the workpiece in the machine coordinate system using the touch probe, and controlling a position of the conductive wire using the X-offset and the Y-offset to machine the workpiece to form the aircraft propulsion system component.

In an embodiment in accordance with any of the aspects or embodiments described above and herein, the method may further include identifying, at the controller, a probe Z-position of the touch probe, in the machine coordinate system, by controlling the WEDM assembly to move the touch probe to contact the calibration artifact at the plurality of probe contact positions with the touch probe disposed within the probe cavity of the calibration artifact.

In an embodiment in accordance with any of the aspects or embodiments described above and herein, the method may further include identifying, at the controller, a wire Z-position of the conductive wire, in the machine coordinate system, by controlling the WEDM assembly to move a first guide head of the WEDM assembly to contact a reference body in a Z-direction. The conductive wire may extend between and to the first guide head and a second guide head of WEDM assembly along a wire axis in the Z-direction. The method may further include calibrating the WEDM assembly by determining a Z-offset of the conductive wire relative to the touch probe and storing the Z-offset in the memory. The Z-offset may be determined using the probe Z-position, the wire Z-position, and the artifact locating parameters.

In an embodiment in accordance with any of the aspects or embodiments described above and herein, the wire cavity may extend through the calibration artifact between and to a first wire cavity end and a second wire cavity end along the wire cavity axis. The calibration artifact may include a wire cavity sidewall. The wire cavity sidewall may extend between and to the first wire cavity end and the second wire cavity end.

In an embodiment in accordance with any of the aspects or embodiments described above and herein, the probe cavity axis may be aligned with a probe axis of the touch probe. The touch probe may extend along the probe axis between and to a proximate end and a distal end. The wire cavity axis may be aligned with the wire axis.

In an embodiment in accordance with any of the aspects or embodiments described above and herein, the probe cavity may extend between and to a first probe cavity end and a second probe cavity end along a probe cavity axis. The calibration artifact may include a probe cavity sidewall and an end surface forming the probe cavity. The probe cavity sidewall may extend between and to the first probe cavity end and the second probe cavity end circumscribing the probe cavity. The end surface may be disposed at the second probe cavity end.

In an embodiment in accordance with any of the aspects or embodiments described above and herein, the method may further include fixedly mounting the calibration artifact on a machining platform of the machining system prior to identifying the probe X-position, the probe Y-position, the wire X-position, and the wire Y-position.

The present invention, and all its aspects, embodiments and advantages associated therewith will become more readily apparent in view of the detailed description provided below, including the accompanying drawings.

DESCRIPTION OF THE DRAWINGS

FIG. 1 schematically illustrates a machining system, in accordance with one or more embodiments of the present invention.

FIG. 2 schematically illustrates components of the machining system of FIG. 1, in accordance with one or more embodiments of the present invention.

FIGS. 3A-C schematically illustrate a touch probe for a probe assembly of various machining systems, in accordance with one or more embodiments of the present invention.

FIG. 4 illustrates a block diagram depicting a method for calibrating a machining system, in accordance with one or more embodiments of the present invention.

FIG. 5 schematically illustrates the machining system at a stage of the method of FIG. 4, in accordance with one or more embodiments of the present invention.

FIG. 6 schematically illustrates the machining system at another stage of the method of FIG. 4, in accordance with one or more embodiments of the present invention.

FIGS. 7A-B schematically illustrate a calibration artifact for calibrating a machining system, in accordance with one or more embodiments of the present invention.

FIG. 8 schematically illustrates the machining system at another stage of the method of FIG. 4, in accordance with one or more embodiments of the present invention.

FIGS. 9A-B schematically illustrate position offsets of a machining system at a stage of the method of FIG. 4, in accordance with one or more embodiments of the present invention.

FIGS. 10A-B schematically illustrate position offsets of another machining system at a stage of the method of FIG. 4, in accordance with one or more embodiments of the present invention.

FIGS. 11A-B schematically illustrate position offsets of another machining system at a stage of the method of FIG. 4, in accordance with one or more embodiments of the present invention.

DETAILED DESCRIPTION

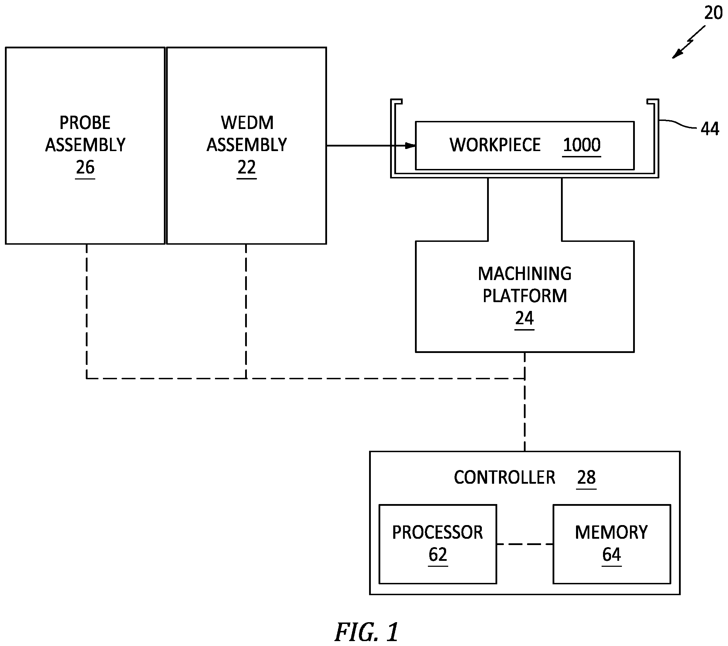

FIG. 1 schematically illustrates a machining system 20. The machining system 20 of FIG. 1 is a computer numeric control (CNC) machining system configured for automated control of one or more machining tools for use in the machining of a workpiece 1000 to form a machined component. As an example, the workpiece 1000 of FIG. 1 may be machined to form an aircraft propulsion system component such as, but not limited to a disk which may form a portion of a bladed rotor (e.g., a bladed turbine rotor, a bladed fan rotor, etc.) of a gas turbine engine for an aircraft propulsion system. The present invention, however, is not limited to any particular workpiece 1000 or machined component type, configuration, or material. The machining system 20 of FIG. 1 includes a wire electrical discharge machining (WEDM) assembly 22, a machining platform 24, a probe assembly 26, and a controller 28.

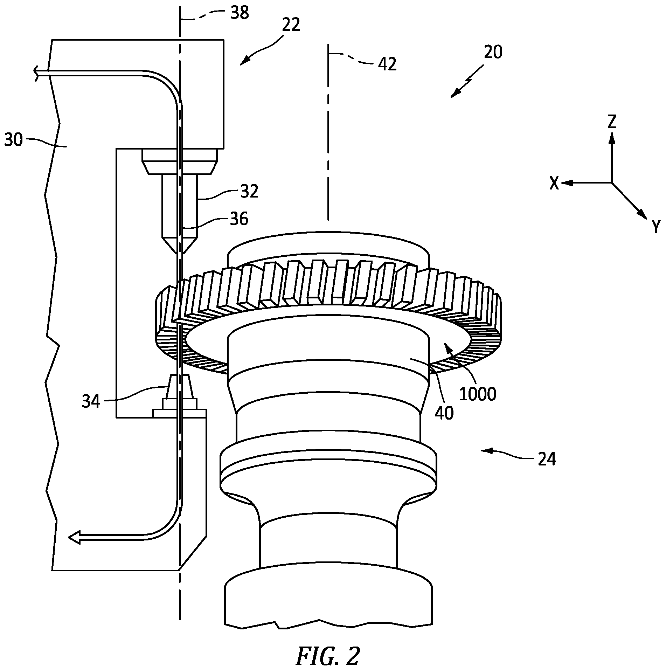

FIG. 2 schematically illustrates a partial cutaway view of the WEDM assembly 22 and the machining platform 24 relative to the workpiece 1000. The WEDM assembly 22 of FIG. 2 includes an assembly body 30, an upper guide head 32, and a lower guide head 34. The assembly body 30 may form a support structure and/or outer housing of the WEDM assembly 22. The upper guide head 32 and the lower guide head 34 are mounted to or otherwise disposed at (e.g., on, adjacent, or proximate) the assembly body 30. The upper guide head 32 and the lower guide head 34 are positioned to vertically guide and direct a conductive wire 36 (e.g., an electrically conductive wire) from the upper guide head 32 to the lower guide head 34 along a wire axis 38 (e.g., in the vertical Z-direction), as shown in FIG. 2. The upper guide head 32 and the lower guide head 34 may alternatively vertically guide and direct the conductive wire 36 from the lower guide head 34 to the upper guide head 32. The conductive wire 36 may typically be configured as a single-strand metal wire (e.g., brass). The WEDM assembly 22 may be configured to translate along the X-direction, the Y-direction, and/or the Z-direction to position the conductive wire 36 relative to the workpiece 1000. The WEDM assembly 22 may additionally include a dielectric fluid assembly (not shown) configured to direct a dielectric fluid (e.g., de-ionized water) toward and/or onto the conductive wire 36 during a machining operation.

The machining platform 24 is configured to support and securely retain the workpiece 1000 (e.g., relative to the WEDM assembly 22) during a machining operation. The machining platform 24 may additionally be configured to position and/or rotate the workpiece 1000. For example, the machining platform 24 of FIG. 2 includes a rotatable platform 40 rotatable about a rotational axis 42 (e.g., in the vertical Z-direction). As shown, for example, in FIG. 1, the machining platform 24 may further include a dielectric fluid tank 44. The tank 44 may support and securely retain the workpiece 1000 within the tank 44. The workpiece 1000, positioned within the tank 44, may be fully or partially immersed in a dielectric fluid (e.g., de-ionized water) retained by the tank 44. The tank 44 is omitted from FIG. 2 for clarity. The machining platform 24 may further include fasteners (e.g., mechanical fasteners) and/or other mounting hardware for securely mounting or otherwise retaining the workpiece 1000 on the machining platform 24.

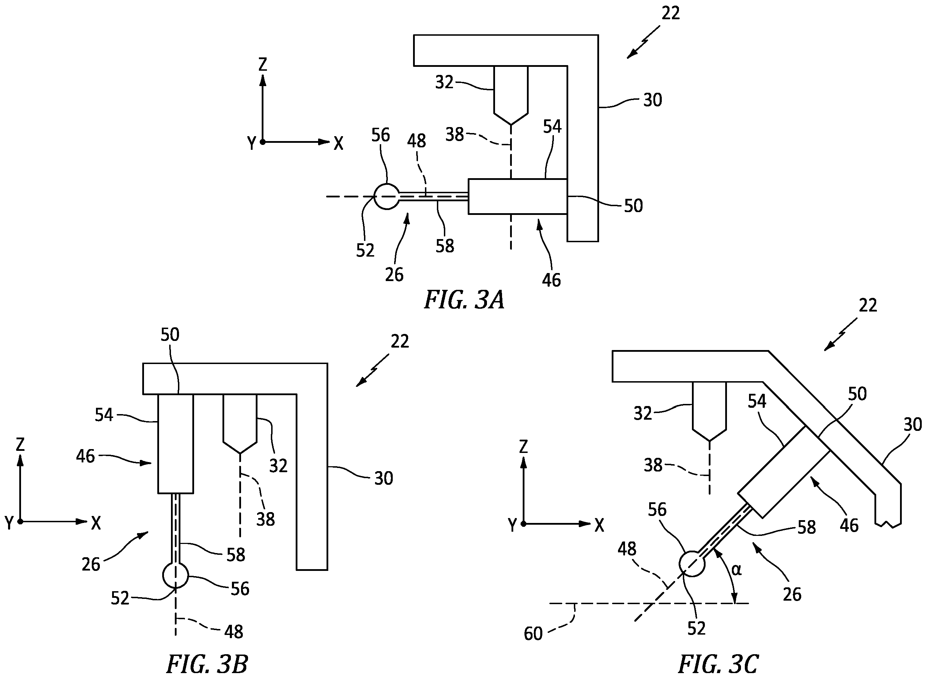

Referring to FIGS. 3A-C, the probe assembly 26 includes a touch probe 46. The touch probe 46 of FIGS. 3A-C extends along a probe axis 48 between and to a proximal end 50 of the touch probe 46 and a distal end 52 of the touch probe 46. The touch probe 46 of FIGS. 3A-C includes a base 54, a tip ball 56, and a shaft 58. The base is disposed at (e.g., on, adjacent, or proximate) the proximal end 50. The tip ball 56 is disposed at (e.g., on, adjacent, or proximate) the distal end 52. The shaft 58 extends between and connects the base 54 and the tip ball 56 along the probe axis 48. The probe assembly 26 (e.g., the base 54) is mounted to or otherwise disposed at (e.g., on, adjacent, or proximate) the assembly body 30. As shown in FIG. 3A, the probe assembly 26 may be positioned on the assembly body 30 with the probe axis 48 extending horizontally (e.g., the probe axis 48 extending in the X-direction). For example, the probe axis 48 may extend in a direction orthogonal or substantially orthogonal to the direction of the wire axis 38. The touch probe 46 may be laterally (e.g., in the Y-direction) offset from the upper guide head 32, the lower guide head 34, and the conductive wire 36. As shown in FIG. 3B, the probe assembly 26 may be positioned on the assembly body 30 with the probe axis 48 extending vertically (e.g., the probe axis 48 extending in the Z-direction). For example, the probe axis 48 may be or substantially parallel to the wire axis 38. As shown in FIG. 3C, the probe assembly 26 may be positioned on the assembly body 30 with the probe axis 48 extending in an oblique direction (e.g., a combination of two or more of the X-direction, the Y-direction, and the Z-direction). For example, as shown in FIG. 3C, the probe axis 48 may be oriented on and extend along an XZ-plane at an angle $\alpha$ (e.g., an acute angle) relative to the horizontal X-direction 60. The touch probe 46 may be laterally (e.g., in the Y-direction) offset from the upper guide head 32, the lower guide head 34, and the conductive wire 36. The touch probe 46 is configured to identify one or more positions relative to a three-dimensional coordinate space based on physical contact between the touch probe 46 (e.g., the tip ball 56) and a surface (e.g., a workpiece surface, an artifact surface, a machining platform surface, etc.).

Referring again to FIG. 1, the controller 28 is connected in signal communication with the WEDM assembly 22 and the probe assembly 26. The controller 28 may additionally be connected in signal communication with the machining platform 24. The controller 28 includes a processor 62 and memory 64. The memory 64 is connected in signal communication with the processor 62. The processor 62 may include any type of computing device, computational circuit, or any type of process or processing circuit capable of executing a series of instructions that are stored in the memory 64, thereby causing the processor 62 to perform or control one or more steps or other processes. The processor 62 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The instructions may be in the form of a CNC programming language (e.g., G-code, M-code, etc.), or another suitable programming language which can be executed by the processor 62. For example, the CNC programming language instructions may be executed by the processor 62 to control positioning of the WEDM assembly 22 (e.g., of the conductive wire 36, the touch probe 46, etc.), a movement speed of the WEDM assembly 22, and/or a rotational position of the rotatable platform 40). The instructions stored in memory 64 may be generated by computer-aided design (CAD) or computer-aided manufacturing (CAM) software, whereby the physical dimensions of a particular workpiece (e.g., the workpiece 1000) may be translated into instructions (e.g., CNC) instructions). The executable instructions may apply to any functionality described herein to enable the machining system 20 to accomplish the same algorithmically and/or coordination of machining system 20 components. The memory 64 may include a single memory device or a plurality of memory devices (e.g., a computer-readable storage device that can be read, written, or otherwise accessed by a general purpose or special purpose computing device, including any processing electronics and/or processing circuitry capable of executing instructions). The present invention is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 28. The controller 28 may include, or may be in communication with, an input device that enables a user to enter data and/or instructions, and may include, or be in communication with, an output device configured, for example to display information (e.g., a visual display or a printer), or to transfer data, etc. Communications between the controller 28 and the machining system 20 and its components may be via a hardwire connection or via a wireless connection. A person of skill in the art will recognize that portions of the controller may assume various forms (e.g., digital signal processor, analog device, etc.) capable of performing the functions described herein.

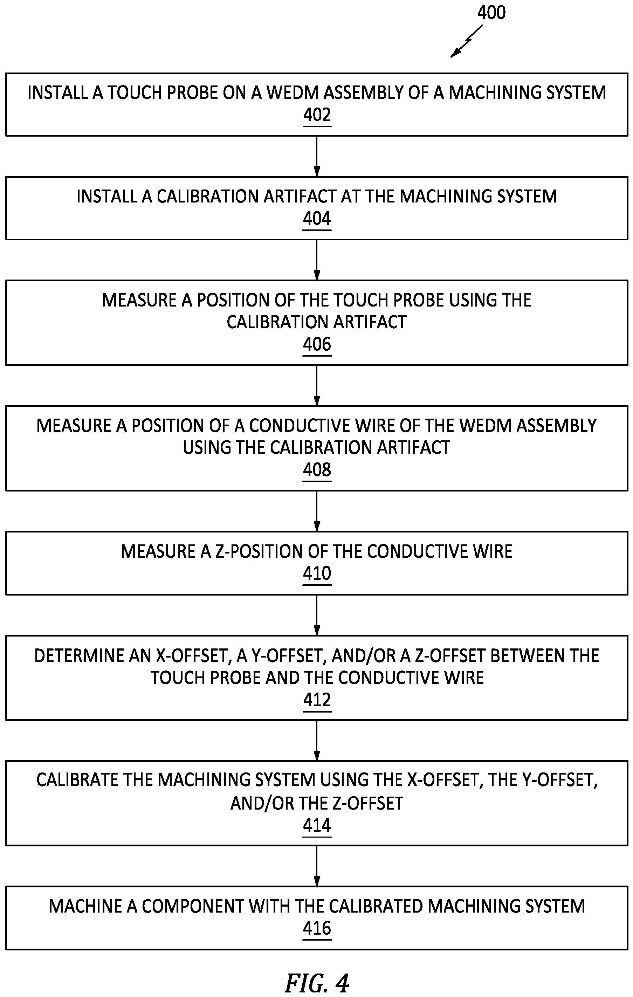

Referring to FIG. 4, a Method 400 for machining a workpiece (e.g., the workpiece 1000) is provided. FIG. 4 illustrates a flowchart for the Method 400. The Method 400 may be performed using the machining system 20, as described herein. The controller 28 may be used to execute or control one or more steps of the Method 400. For example, the processor 62 may execute instructions stored in memory 64, thereby causing the controller 28 and/or its processor 62 to execute or otherwise control one or more steps of the Method 400 using the WEDM assembly 22, the probe assembly 26, and/or the machining platform 24. However, it should be understood that the Method 400 is not limited to use with the machining system 20 described herein. Workpieces and machining system components may be located relative to a machine coordinate system (MCS) arranged in an X-direction, a Y-direction, and a Z-direction. Unless otherwise noted herein, it should be understood that the steps of Method 400 are not required to be performed in the specific sequence in which they are discussed below and, in various embodiments, the steps of Method 400 may be performed separately or simultaneously. Further, it should be understood that not all of the steps of the method 400, discussed below, may be required unless otherwise described herein.

Step 402 includes installing the touch probe 46 on the WEDM assembly 22 (e.g., the assembly body 30). The touch probe 46 may be mounted to or otherwise disposed at (e.g., on, adjacent, or proximate) the assembly body 30 as described above and illustrated in FIGS. 3A-C. For example, the touch probe 46 may be mounted on the assembly body 30 with the probe axis 48 oriented horizontally, vertically, or obliquely, as previously discussed.

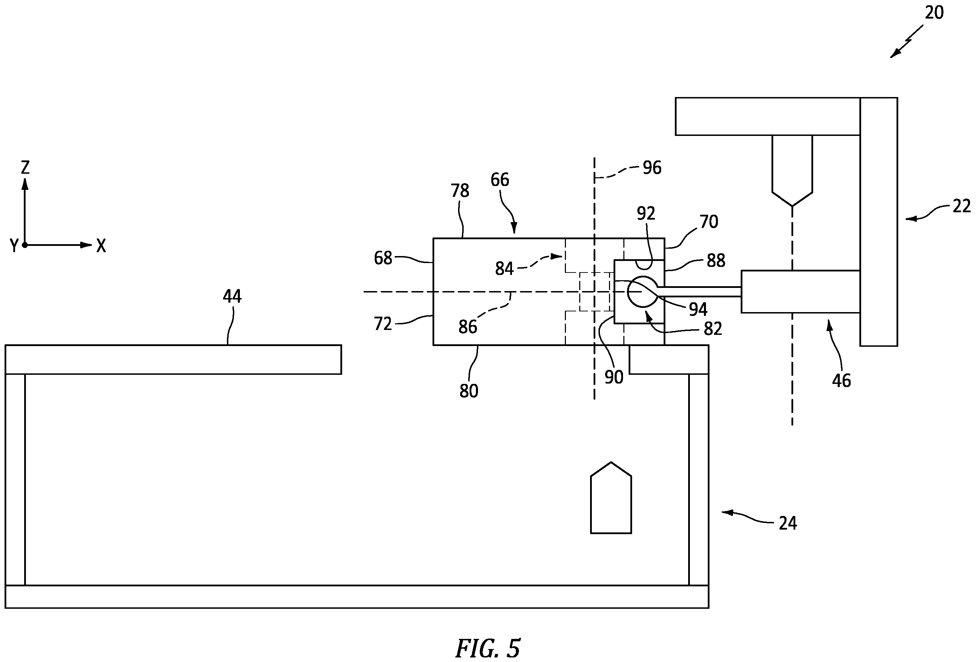

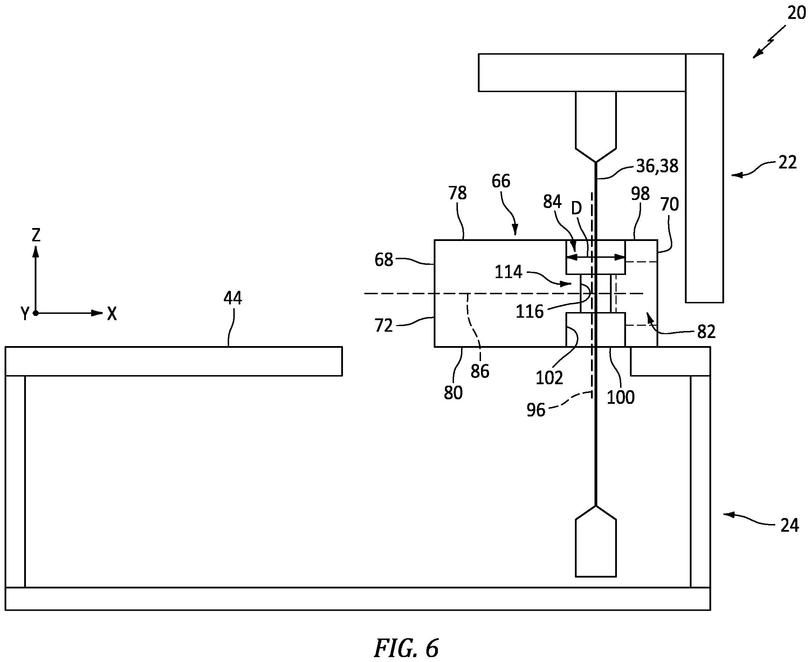

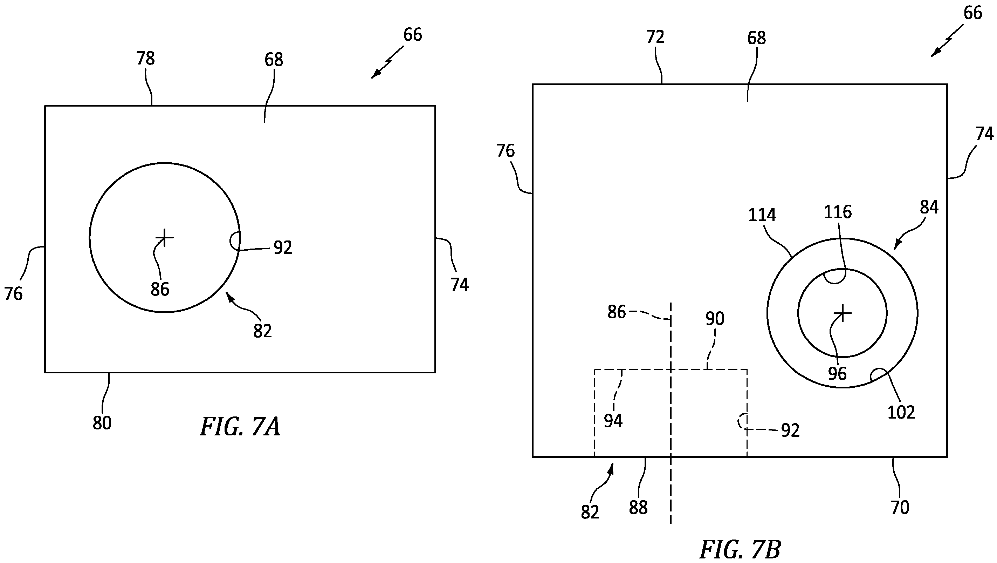

Referring to FIGS. 5, 6, and 7A-B Step 404 includes installing a calibration artifact 66 at (e.g., on, adjacent, or proximate) the machining system 20. For example, the calibration artifact 66 may be mounted on the machining platform 24 or another fixed structure proximate the WEDM assembly 22 (e.g., within the movement range of the WEDM assembly 22 to effect contact of the touch probe 46 and the conductive wire 36 with the calibration artifact 66). The calibration artifact 66 of FIGS. 5 and 6 is mounted on an upper surface of the tank 44, however, the present invention is not limited to the foregoing exemplary calibration artifact 66 mounting configuration, location, or orientation.

The calibration artifact 66 of FIGS. 5, 6, and 7A-B includes an artifact body 68. The artifact body 68 extends horizontally (e.g., in the X-direction) between and to a first end 70 of the artifact body 68 and a second end 72 of the artifact body 68. The artifact body 68 extends laterally (e.g., in the Y-direction) between and to a first lateral side 74 of the artifact body 68 and a second lateral side 76 of the artifact body 68. The artifact body 68 extends vertically (e.g., in the Z-direction) between and to an upper side 78 of the artifact body 68 and a lower side 80 of the artifact body 68. The artifact body 68 forms a probe cavity 82 and a wire cavity 84 of the calibration artifact 66.

The probe cavity 82 extends along and is centered about a probe cavity axis 86. For example, the probe cavity 82 may have a cylindrical or substantially cylindrical shape centered about the probe cavity axis 86. The artifact body 68 of FIGS, 5, 6, and 7A-B forms the probe cavity 82 on the first end 70 with the probe cavity axis 86 extending horizontally (e.g., in the X-direction) between and through the first end 70 and the second end 72. The probe cavity 82 extends along the probe cavity axis 86 from a first probe cavity end 88 of the probe cavity 82 to a second probe cavity end 90 of the probe cavity 82. The first probe cavity end 88 is disposed at (e.g., on, adjacent, or proximate) the first end 70. The radial perimeter of the probe cavity 82 (e.g., relative to the probe cavity axis 86) may be formed by a probe cavity sidewall 92 of the artifact body 68 circumscribing the probe cavity 82 and extending between and to the first probe cavity end 88 and the second probe cavity end 90. The second probe cavity end 90 may be formed by an end surface 94 of the artifact body 68 as a closed end of the probe cavity 82.

The wire cavity 84 extends along and is centered about a wire cavity axis 96. For example, the wire cavity 84 may have a cylindrical or substantially cylindrical shape centered about the wire cavity axis 96. The artifact body 68 of FIGS, 5, 6, and 7A-B forms the wire cavity 84 extending between and to the upper side 78 and the lower side 80 along the wire cavity axis 96. The wire cavity axis 96 extends vertically (e.g., in the Z-direction) between and through the upper side 78 and the lower side 80. The wire cavity 84 extends along the wire cavity axis 96 from a first wire cavity end 98 of the wire cavity 84 to a wire cavity end 100 of the wire cavity 84. The first wire cavity end 98 is disposed at (e.g., on, adjacent, or proximate) the upper side 78. The second wire cavity end 100 is disposed at (e.g., on, adjacent, or proximate) the lower side 80. The radial perimeter of the wire cavity 84 (e.g., relative to the wire cavity axis 96) may be formed by a wire cavity sidewall 102 of the artifact body 68 circumscribing the wire cavity 84 and extending between and to the first wire cavity end 98 and the second wire cavity end 100. The wire cavity sidewall 102 may form a diameter D of the wire cavity 84 which varies along the wire cavity axis 96. For example, the wire cavity sidewall 102 may form a counterbore shape of the wire cavity 84 for which a size of the diameter D may be greater at the first wire cavity end 98 and/or the second wire cavity end 100 relative to an intermediate portion of the wire cavity 84 along the wire cavity axis 96. The reduced-diameter D intermediate portion of the wire cavity 84 may be formed by a contact portion 114 of the artifact body 68. The contact portion 114 forms a contact surface 116 extending circumferentially about (e.g., completely around) the wire cavity axis 96 and circumscribing the wire cavity 84. The reduced axial span of the contact surface 116 (e.g., relative to the wire cavity axis 96) facilitates improved precision for locating the conductive wire 36 in the machine coordinate system, as will be discussed in further detail.

Step 404 may include positioning the calibration artifact 66 at (e.g., on, adjacent, or proximate) the machining system 20 such that the wire axis 38 is aligned with (e.g., parallel to or substantially parallel to) the wire cavity axis 96 and the probe axis 48 is aligned with (e.g., parallel to or substantially parallel to) the probe cavity axis 86. This position of the calibration artifact 66 at (e.g., on, adjacent, or proximate) the machining system 20 corresponds to a predetermined position and orientation for the calibration artifact 66 identified in instructions (e.g., CNC instructions) used by the controller 28 (e.g., the processor 62) for execution of the Method 400 (e.g., a calibration program). Predetermined dimensions of the calibration artifact 66 are stored in the memory 64. The position, orientation, and dimension values (hereinafter predetermined "artifact locating parameters") facilitate locating of the conductive wire 36 in the machine coordinate system, as will be discussed in further detail.

Step 406 includes measuring a position of the touch probe 46 (e.g., the tip ball 56), relative to the machine coordinate system of the machining system 20, using the calibration artifact 66 installed at (e.g., on, adjacent, or proximate) the machining system 20 (see Step 404). The WEDM assembly 22 may move the touch probe 46 with the assembly body 30 to contact portions of the calibration artifact 66 at (e.g., on, adjacent, or proximate) the probe cavity 82 (e.g., with the touch probe 46 disposed within the probe cavity 82; see FIG 5). The controller 28 controls the WEDM assembly 22 to move the touch probe 46, for example, in the X-direction to contact the calibration artifact 66 (e.g., the end surface 94) at one or more positions. The controller 28 may identify an X-position of the touch probe 46 (e.g., the tip ball 56), relative to the machine coordinate system, based on a detected contact of the touch probe 46 with the calibration artifact 66 (e.g., the end surface 94) in the X-direction. The controller 28 controls the WEDM assembly 22 to move the touch probe 46, for example, in the Y-direction to contact the calibration artifact 66 (e.g., the probe cavity sidewall 92) at one or more positions. The controller 28 may identify a Y-position of the touch probe 46 (e.g., the tip ball 56), relative to the machine coordinate system, based on a detected contact of the touch probe 46 with the calibration artifact 66 (e.g., the probe cavity sidewall 92) in the Y-direction. In some embodiments, the controller 28 may additionally control the WEDM assembly 22 to move the touch probe 46 in the Z-direction to contact the calibration artifact 66 (e.g., the probe cavity sidewall 92) at one or more positions. The controller 28 may identify a Z-position of the touch probe 46 (e.g., the tip ball 56), relative to the machine coordinate system, based on a detected contact of the touch probe 46 with the calibration artifact 66 (e.g., the probe cavity sidewall 92) in the Z-direction. The controller 28 may, therefore, identify an (X,Y) position or an (X,Y,Z) position of the touch probe 46 (e.g., the tip ball 56) relative to the machine coordinate system for a given, controlled position of the WEDM assembly 22 (e.g., the assembly body 30).

Step 408 includes measuring a position of the conductive wire 36, relative to the machine coordinate system of the machining system 20, using the calibration artifact 66 installed at (e.g., on, adjacent, or proximate) the machining system 20 (see Step 404). With the conductive wire 36 installed on the WEDM assembly 22 (e.g., extending between and to the upper guide head 32 and the lower guide head 34) and disposed within the wire cavity 84, the WEDM assembly 22 may move the conductive wire 36 with the assembly body 30 to contact portions of the calibration artifact 66 at (e.g., on, adjacent, or proximate) the wire cavity 84. The controller 28 controls the WEDM assembly 22 to move the conductive wire 36, for example, in the X-direction to contact the calibration artifact 66 (e.g., the wire cavity sidewall 102) at one or more positions. The controller 28 may identify an X-position of the conductive wire 36, relative to the machine coordinate system, based on a detected contact of the conductive wire 36 with the calibration artifact 66 (e.g., the wire cavity sidewall 102) in the X-direction. The controller 28 controls the WEDM assembly 22 to move the conductive wire 36, for example, in the Y-direction to contact the calibration artifact 66 (e.g., the wire cavity sidewall 102) at one or more positions. The controller 28 may identify a Y-position of the conductive wire 36, relative to the machine coordinate system, based on a detected contact (e.g., a measured contact force) of the conductive wire 36 with the calibration artifact 66 (e.g., the wire cavity sidewall 102) in the Y-direction. The controller 28 may, therefore, identify an (X,Y) position of the conductive wire 36 relative to the machine coordinate system for a given, controlled position of the WEDM assembly 22 (e.g., the assembly body 30).

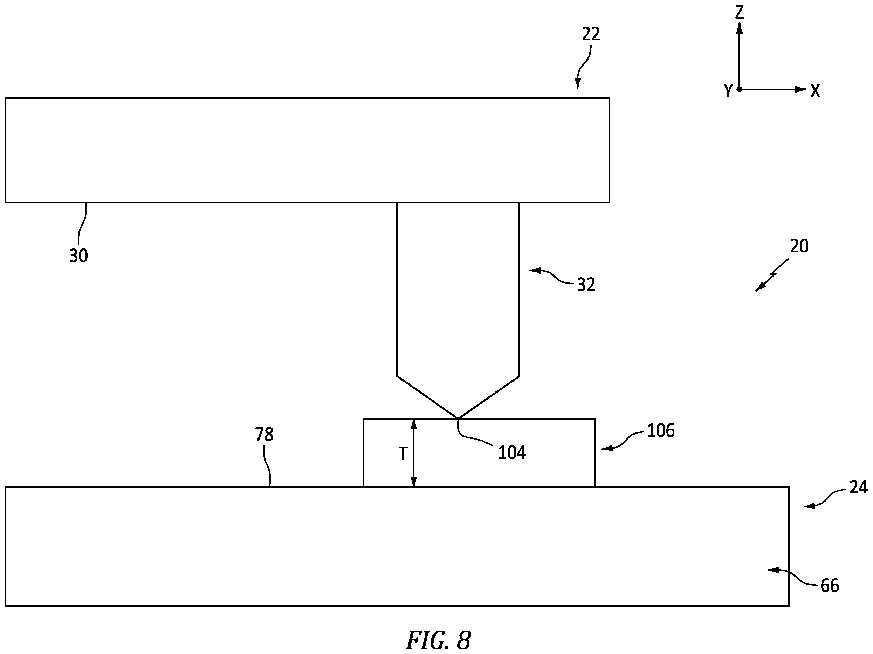

Referring to FIG. 8, Step 410 may optionally be performed to measure a Z-position of the conductive wire 36. The Z-position of the conductive wire 36 (see FIG. 6) may be determined, for example, based on a Z-position of the upper guide head 32 and/or the lower guide head 34. As shown in FIG. 8, for example, the Z-position of a distal end 104 of the upper guide head 32 (e.g., an uppermost Z-position of an exposed portion of the conductive wire 36) may be identified by the controller 28 (see FIG. 1). The Z-position of the distal end 104 may be identified by the controller 28 using a reference body 106. The reference body 106 may have a predetermined dimension, such as the thickness T, in the Z-direction. The reference body 106 may be mounted to or positioned at (e.g., on, adjacent, or proximate) the machining system 20 on a surface having a predetermined Z-position relative to the machine coordinate system. For example, the reference body 106 may be disposed on the machining platform 24 (e.g., the tank 44; see FIG. 1) or the calibration artifact 66 (e.g., the upper side 78). The reference body 106 of FIG. 8 is disposed on the upper side 78. Alternatively, the calibration artifact 66 may form the reference body 106. The controller 28 may control the WEDM assembly 22 to move the assembly body 30 and the upper guide head 32 in the Z-direction to contact the reference body 106 with the distal end 104. The controller 28 may identify a Z-position of the distal end 104, relative to the machine coordinate system, based on a detected contact of the distal end 104 with the reference body 106 in the Z-direction.

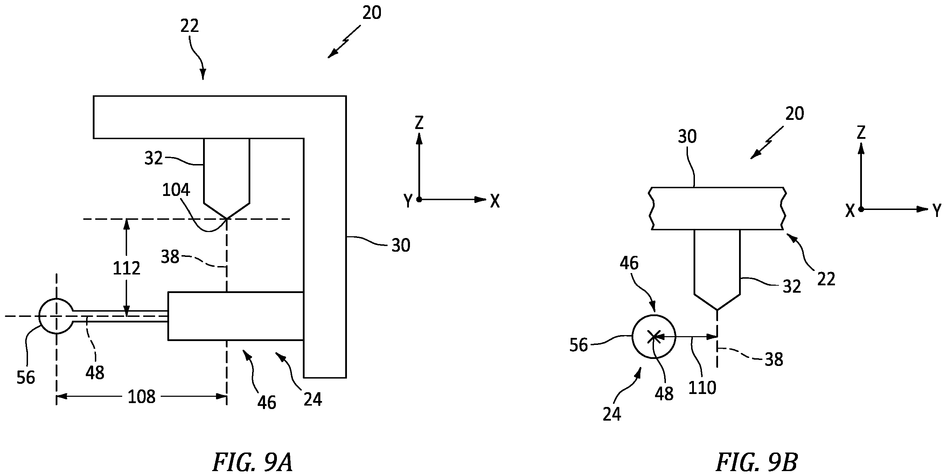

Referring to FIGS. 9A-B, 10A-B, and 11A-B, Step 412 includes determining an X-offset and a Y-offset between the touch probe 46 (e.g., the probe axis 48 at the tip ball 56) and the conductive wire 36 (e.g., the wire axis 38; conductive wire 36 omitted in FIGS. 9A-B, 10A-B, and 11A-B for clarity; see FIG. 6). Step 412 may further include determining a Z-offset between the touch probe 46 (e.g., the probe axis 48 at the tip ball 56) and the conductive wire 36 (e.g., the wire axis 38). The controller 28 (see FIG. 1) may determine the X-offset, the Y-offset, and/or the Z-offset using the identified X, Y, and/or Z positions of the touch probe 46 (e.g., the probe axis 48 at the tip ball 56) (see Step 406), the identified X, Y, and/or Z positions of the conductive wire 36 (see Step 408), and the artifact locating parameters of the calibration artifact 66 (see Step 404) at the points of contact between the touch probe 46 (e.g., the tip ball 56) and the calibration artifact 66 and between the conductive wire 36 and the calibration artifact 66. For example, the controller 28 may determine an X-offset 108, a Y-offset 110, and/or a Z-offset 112, relative to the machine coordinate system, using the following equations [1]-[3]:

$$X_{Offset} = X_{ProbePosition} - X_{WirePosition} + X_{ArtifactPosition} \quad \textbf{[1]}$$

$$Y_{Offset} = Y_{ProbePosition} - Y_{WirePosition} + Y_{ArtifactPosition} \quad \textbf{[2]}$$

$$Z_{Offset} = Z_{ProbePosition} - Z_{WirePosition} + Z_{ArtifactPosition} \quad \textbf{[3]}$$

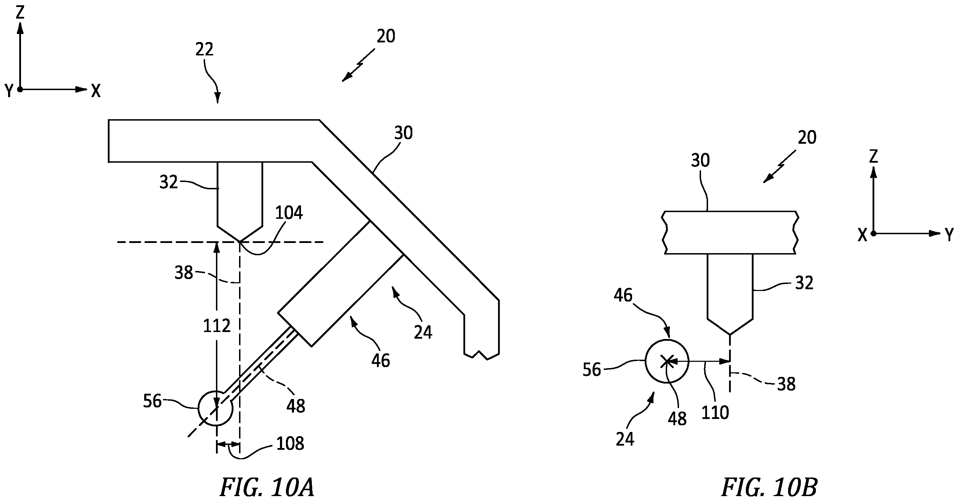

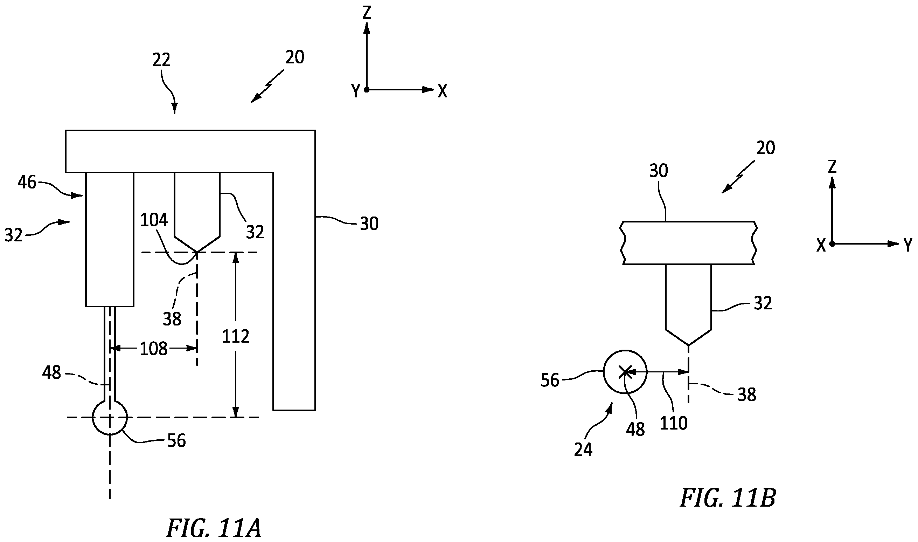

The X-offset 108, the Y-offset 110, and/or the Z-offset 112 may be determined by the controller 28 for any position and orientation of the touch probe 46 (e.g., the probe axis 48) relative to the conductive wire 36 (e.g., the wire axis 38) including, but not limited to, a horizontal orientation of the touch probe 46 (see FIGS. 9A-B), an oblique orientation of the touch probe 46 (see FIGS. 10A-B), and a vertical orientation of the touch probe 46 (see FIGS. 11A-B).

Step 414 includes calibrating the machining system 20 by calibrating the position of the conductive wire 36 in the machine coordinate system relative to the position of the touch probe 46 (e.g., the tip ball 56) using the X-offset 108, the Y-offset 110, and/or the Z-offset 112. The X-offset 108, the Y-offset 110, and/or the Z-offset 112 may be stored by the controller 28 (e.g., in memory 64) for use by the controller 28 to control the position of the conductive wire 36 in the machine coordinate system by controlling the movement of the WEDM assembly 22.

Referring again to FIG. 1, Step 416 includes controlling the calibrated machining system 20 to machine the workpiece 1000 with the WEDM assembly 22 to form, for example, an aircraft propulsion system component. The workpiece 1000 is mounted (e.g., fixedly mounted) to the machining platform 24 (e.g., within the dielectric fluid tank 44). The controller 28 may control the WEDM assembly 22, calibrated using the X-offset 108, the Y-offset 110, and/or the Z-offset 112, to locate and machine the workpiece 1000. The controller 28 may control the WEDM assembly 22 to position the touch probe 46 (e.g., the tip ball 56) to contact the workpiece 1000 at a plurality of positions to locate the workpiece 1000 in the machine coordinate system. Once the workpiece 1000 is located using the touch probe 46, the controller 28 may control the WEDM assembly 22 to machine the workpiece 1000 by positioning the conductive wire 36 relative to the workpiece 1000 using the instructions (e.g., CNC instructions) stored in memory 64 for machining the workpiece 1000.

Aspects of the present invention facilitate accurate calibration of a WEDM assembly using a touch probe having any orientation relative to other components of the WEDM assembly (e.g., the assembly body 30, the conductive wire 36, etc.) in the machine coordinate system. Moreover, locating the touch probe and the conductive wire in the machine coordinate system can be performed using a single calibration artifact, thereby reducing calibration time and artifact preparation.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the invention may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the invention--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A machining system (20) for an aircraft propulsion system component, the machining system (20) comprising:

   a wire electrical discharge machining (WEDM) assembly (22) including an assembly body (30), an upper guide head (32), a lower guide head (34), and a conductive wire (36), wherein the assembly body (30) is movable relative to a machine coordinate system of the machining system (20), the machine coordinate system includes at least an X-direction and a Y-direction, the upper guide head (32) and the lower guide head (34) are disposed at the assembly body (30), and the conductive wire (36) extends between and to the upper guide head (32) and the lower guide head (34) along a wire axis (38) in a Z-direction;
   a probe assembly (26) including a touch probe (46), the touch probe (46) extending between and to a proximal end (50) and a distal end (52) along a probe axis (48), the proximal end (50) mounted to the assembly body (30);
   a calibration artifact (66) including an artifact body (68), the artifact body (68) forming a probe cavity (82) and a wire cavity (84), the probe cavity (82) extending about a probe cavity axis (86), the wire cavity (84) extending about a wire cavity axis (96) different than the probe cavity axis (86); and
   a controller (28) including a processor (62) in communication with a non-transitory memory (64) storing artifact locating parameters of the calibration artifact (66) and instructions, and the instructions, when executed by the processor (62), cause the processor (62) to:

identify a probe X-position and a probe Y-position of the touch probe (46), in the machine coordinate system, by controlling the WEDM assembly (22) to move the touch probe (46) to contact the calibration artifact (66) at a plurality of probe contact positions with the touch probe (46) disposed within the probe cavity (82);

identify a wire X-position and a wire Y-position of the conductive wire (36), in the machine coordinate system, by controlling the WEDM assembly (22) to move the conductive wire (36) to contact the calibration artifact (66) at a plurality of wire contact positions with the conductive wire (36) disposed within the wire cavity (84); and

calibrate the machining system (20) by determining an X-offset and a Y-offset of the conductive wire (36) relative to the touch probe (46) and storing the X-offset and the Y-offset in the memory (64), the X-offset determined using the probe X-position, the wire X-position, and the artifact locating parameters, the Y-offset determined using the probe Y-position, the wire Y-position, and the artifact locating parameters.

2. The machining system (20) of claim 1, wherein the machine coordinate system further includes the Z-direction, and the instructions, when executed by the processor (62), further cause the processor (62) to identify a probe Z-position of the touch probe (46), in the machine coordinate system, by controlling the WEDM assembly (22) to move the touch probe (46) to contact the calibration artifact (66) at the plurality of probe contact positions with the touch probe (46) disposed within the probe cavity (82).

3. The machining system (20) of claim 2, further comprising a reference body (106), and the instructions, when executed by the processor (62), further cause the processor (62) to:

identify a wire Z-position of the conductive wire (36), in the machine coordinate system, by controlling the WEDM assembly (22) to move the upper guide head (32) to contact the reference body (106) in the Z-direction; and

calibrate the WEDM assembly (22) by determining a Z-offset of the conductive wire (36) relative to the touch probe (46) and storing the Z-offset in the non-transitory memory (64), the Z-offset determined using the probe Z-position, the wire Z-position, and the artifact locating parameters.

4. The machining system (20) of claim 1, 2 or 3, wherein the probe cavity (82) extends between and to a first probe cavity end (88) and a second probe cavity end (90) along the probe cavity axis (86), the calibration artifact (66) includes a probe cavity sidewall (92) and an end surface (94) forming the probe cavity (82), the probe cavity sidewall (92) extends between and to the first probe cavity end (88) and the second probe cavity end (90) circumscribing the probe cavity (82), and the end surface (94) is disposed at the second probe cavity end (90).

5. The machining system (20) of any preceding claim, wherein the wire cavity (84) extends through the calibration artifact (66) between and to a first wire cavity end (98) and a second wire cavity end (100) along the wire cavity axis (96), the calibration artifact (66) includes a wire cavity sidewall (102), and the wire cavity sidewall (102) extends between and to the first wire cavity (98) end and the second wire cavity end (100), optionally wherein the wire cavity sidewall (102) forms a counterbore shape of the wire cavity (84).

6. The machining system (20) of any preceding claim, wherein the probe cavity axis (86) is aligned with the probe axis (48) and the wire cavity axis (96) is aligned with the wire axis (38).

7. The machining system (20) of claim 6, wherein:

the probe axis (48) extends horizontally in the X-direction; or
the probe axis (48) extends vertically in the Z-direction.

8. The machining system (20) of claim 6, wherein the probe axis (48) extends obliquely relative to two or more of the X-direction, the Y-direction, or the Z-direction.

9. The machining system (20) of any preceding claim, further comprising a machining platform (24), and the calibration artifact (66) is fixedly mounted to the machining platform (24), optionally wherein the machining platform (24) includes a dielectric fluid tank (44), and the calibration artifact (66) is fixedly mounted to the machining platform (24) at the dielectric fluid tank (44).

10. A method for calibrating a machining system (20) for an aircraft propulsion system component, the method comprising:

identifying, at a controller (28) of the machining system (20), a probe X-position and a probe Y-position of a touch probe (46) of the machining system (20), in a machine coordinate system, by controlling a WEDM assembly (22) to move the touch probe (46) to contact a calibration artifact (66) at a plurality of probe contact positions with the touch probe (46) disposed within a probe cavity (82) of the calibration artifact (66);

identifying, at the controller (28), a wire X-position and a wire Y-position of a conductive wire (36) of the WEDM assembly (22), in the machine coordinate system, by controlling the WEDM assembly (22) to move the conductive wire (36) to contact the calibration artifact (66) at a plurality of wire contact positions with the conductive wire (36) disposed within a wire cavity (84) of the calibration artifact (66); and

calibrating the machining system (20), at the controller (28), by determining an X-offset and a Y-offset of the conductive wire (36) relative to the touch probe (46) and storing the X-offset and the Y-offset in memory (64) of the controller (28), the X-offset determined using the probe X-position, the wire X-position, and artifact locating parameters of the calibration artifact (66), the Y-offset determined using the probe Y-position, the wire Y-position, and the artifact locating parameters,

optionally wherein:

the wire cavity (84) extends through the calibration artifact (66) between and to a first wire cavity end (98) and a second wire cavity end (100) along a wire cavity axis (96), the calibration artifact (66) includes a wire cavity sidewall (102), and the wire cavity sidewall (102) extends between and to the first wire cavity end (98) and the second wire cavity end (100); and/or

the probe cavity (82) extends between and to a first probe cavity end (88) and a second probe cavity end (90) along a probe cavity axis (86), the calibration artifact (66) includes a probe cavity sidewall (92) and an end surface (94) forming the probe cavity (82), the probe cavity sidewall (92) extends between and to the first probe cavity end (88) and the second probe cavity end (90) circumscribing the probe cavity (82), and the end surface (94) is disposed at the second probe cavity end (90).

11. The method of claim 10, further comprising forming the aircraft propulsion system component, with the machining system (20), by positioning a workpiece (1000) on a machining platform (24) of the machining system (20), locating the workpiece (1000) in the machine coordinate system using the touch probe (46), and controlling a position of the conductive wire (36) using the X-offset and the Y-offset to machine the workpiece (1000) to form the aircraft propulsion system component.

12. The method of claim 10 or 11, further comprising identifying, at the controller (28), a probe Z-position of the touch probe (46), in the machine coordinate system, by controlling the WEDM assembly (22) to move the touch probe (46) to contact the calibration artifact (66) at the plurality of probe contact positions with the touch probe (46) disposed within the probe cavity (82) of the calibration artifact (66).

13. The method of claim 12, further comprising:

identifying, at the controller (28), a wire Z-position of the conductive wire (36), in the machine coordinate system, by controlling the WEDM assembly (22) to move a first guide head (32) of the WEDM assembly (22) to contact a reference body (106) in a Z-direction, the conductive wire (36) extending between and to the first guide head (32) and a second guide head (34) of WEDM assembly (22) along a wire axis (38) in the Z-direction; and

calibrating the WEDM assembly (22) by determining a Z-offset of the conductive wire (36) relative to the touch probe (46) and storing the Z-offset in the memory, the Z-offset determined using the probe Z-position, the wire Z-position, and the artifact locating parameters.

14. The method of claim 13, wherein a probe cavity axis (86) is aligned with a probe axis (48) of the touch probe (46), the touch probe (46) extending along the probe axis (48) between and to a proximate end (50) and a distal end (52), and a wire cavity axis (96) is aligned with the wire axis (38).

15. The method of any of claims 10 to 14, further comprising fixedly mounting the calibration artifact (66) on a machining platform (24) of the machining system (20) prior to identifying the probe X-position, the probe Y-position, the wire X-position, and the wire Y-position.

WORKPIECE 1000

44

20

MACHINING PLATFORM 24

WEDM ASSEMBLY 22

PROBE ASSEMBLY 26

CONTROLLER 28

PROCESSOR 62

MEMORY 64

FIG. 1

*FIG. 2*

EP 4 624 083 A1

FIG. 3A

FIG. 3B

FIG. 3C

400

| INSTALL A TOUCH PROBE ON A WEDM ASSEMBLY OF A MACHINING SYSTEM |
|---|
| 402 |

| INSTALL A CALIBRATION ARTIFACT AT THE MACHINING SYSTEM |
|---|
| 404 |

| MEASURE A POSITION OF THE TOUCH PROBE USING THE CALIBRATION ARTIFACT |
|---|
| 406 |

| MEASURE A POSITION OF A CONDUCTIVE WIRE OF THE WEDM ASSEMBLY USING THE CALIBRATION ARTIFACT |
|---|
| 408 |

| MEASURE A Z-POSITION OF THE CONDUCTIVE WIRE |
|---|
| 410 |

| DETERMINE AN X-OFFSET, A Y-OFFSET, AND/OR A Z-OFFSET BETWEEN THE TOUCH PROBE AND THE CONDUCTIVE WIRE |
|---|
| 412 |

| CALIBRATE THE MACHINING SYSTEM USING THE X-OFFSET, THE Y-OFFSET, AND/OR THE Z-OFFSET |
|---|
| 414 |

| MACHINE A COMPONENT WITH THE CALIBRATED MACHINING SYSTEM |
|---|
| 416 |

*FIG. 4*

FIG. 5

**FIG. 6**

*FIG. 7A*

*FIG. 7B*

EP 4 624 083 A1

*FIG. 8*

EP 4 624 083 A1

*FIG. 9A*

*FIG. 9B*

EP 4 624 083 A1

*FIG. 10B*

*FIG. 10A*

FIG. 11B

FIG. 11A

Europäisches
Patentamt

European
Patent Office

Office européen
des brevets

# EUROPEAN SEARCH REPORT

**Application Number**

EP 25 16 7465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/331510 A1 (YAMANE HIKARU [JP]) 13 November 2014 (2014-11-13) * paragraphs [0041], [0042] * * paragraph [0046] * * figures 6-8 * | 1-15 | INV. B23H7/20 G01B21/04 G05B19/401 |
| A | US 2021/187645 A1 (MITSUYASU TAKASHI [JP] ET AL) 24 June 2021 (2021-06-24) * figure 3 * * paragraph [0023] * * paragraphs [0043] - [0045] * | 1,10 | |
| A | US 2023/259094 A1 (ING VISAL [CA] ET AL) 17 August 2023 (2023-08-17) * paragraph [0041] * | 1,10 | |

**TECHNICAL FIELDS SEARCHED (IPC)**

G01B
G05B
B23H

The present search report has been drawn up for all claims

| Place of search | Date of completion of the search | Examiner |
|---|---|---|
| The Hague | 22 August 2025 | Jaeger, Hein |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 7465

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2025

| Patent document cited in search report | Publication date | Patent family member(s) | | Publication date |
|---|---|---|---|---|
| US 2014331510 A1 | 13-11-2014 | CN | 104139317 A | 12-11-2014 |
| | | EP | 2801438 A1 | 12-11-2014 |
| | | JP | 5674858 B2 | 25-02-2015 |
| | | JP | 2014217939 A | 20-11-2014 |
| | | US | 2014331510 A1 | 13-11-2014 |
| US 2021187645 A1 | 24-06-2021 | CN | 109715332 A | 03-05-2019 |
| | | DE | 112018003672 T5 | 14-05-2020 |
| | | JP | 6291619 B1 | 14-03-2018 |
| | | JP | 2019018314 A | 07-02-2019 |
| | | US | 2019022780 A1 | 24-01-2019 |
| | | US | 2021187645 A1 | 24-06-2021 |
| | | WO | 2019016984 A1 | 24-01-2019 |
| US 2023259094 A1 | 17-08-2023 | CA | 3189215 A1 | 11-08-2023 |
| | | EP | 4227747 A1 | 16-08-2023 |
| | | US | 2023259094 A1 | 17-08-2023 |

EPO FORM P0459

For more details about this annex : see Official Journal of the European Patent Office, No. 12/82